# EUROPÄISCHE PATENTANMELDUNG

(11) **EP 2 237 011 A2**
(43) Veröffentlichungstag der Anmeldung: **06.10.2010**
(21) Anmeldenummer: 10157908.4
(22) Anmeldetag: 26.03.2010
(51) Int. Cl.: G01M 13/02

(54) **Vorrichtung und Verfahren zur Prüfung der Betriebsfestigkeit einer Exzenterwelle**

(30) Priorität: 31.03.2009 DE 102009015689
(71) Anmelder: Industrieanlagen-Betriebsgesellschaft mbH, 85521 Ottobrunn (DE)
(72) Erfinder: Fröschl, Jürgen, 85604 Zorneding (DE); Decker, Matthias, 82256, Fürstenfeldbruck (DE); Rödling, Steffen, 83620, Feldkirchen-Westerham (DE)
(74) Vertreter: Bohnenberger, Johannes

(57) **Zusammenfassung**

Die Erfindung bezieht sich auf eine Vorrichtung zur Prüfung der Betriebsfestigkeit einer Exzenterwelle (10), insbesondere einer Kurbelwelle, einer Nockenwelle und dgl., oder eines Exzenterwellensegments mit einer Einspanneinrichtung (11) zum drehfesten Fixieren einer Abtriebsseite (10a) der Exzenterwelle (10) oder des Exzenterwellensegments, mehreren Lagerstellen (12a, 12b, 12c, 12d, 12e) zur drehbaren Lagerung der Exzenterwelle (10) oder des Exzenterwellensegments, die voneinander beabstandet und jeweils mit der Einspanneinrichtung (11) fluchtend angeordnet sind, und wenigstens einer Lasteinrichtung (13), die im Prüfbetrieb zwischen zwei Lagerstellen (12a, 12b, 12c, 12d, 12e) angeordnet und angepasst ist derart, dass die Lasteinrichtung (13) an einem Exzenterabschnitt (10b) angreift und in diesen eine Last in Form einer Tangentialkraft und/oder Radialkraft oder in Form einer tangentialen und/oder radialen Kraftkomponente einleitet.

## Beschreibung

Die Erfindung betrifft eine Vorrichtung und ein Verfahren zur Prüfung der Betriebsfestigkeit einer Exzenterwelle, insbesondere einer Kurbelwelle, einer Nockenwelle und dergleichen.

Kurbelwellen werden dazu verwendet, die vom Zylinderkolben auf die Pleuelstange übertragene Gaskraft in ein Drehmoment umzuwandeln. Dabei werden die Kurbelwellen durch Biege- und Torsionsmomente sowie durch Druck- und Zugkräfte stark belastet. Prüfstände zur Prüfung der Betriebsfestigkeit sind bekannt und auf dem Markt erhältlich. Dabei kommen Prüfstände zum Einsatz, die eine Biegeprüfung ermöglichen, wobei ein Kurbelwellensegment bestehend aus einem Hubzapfen, zwei Kurbelwangen und zwei Wellenzapfen mittels eines Resonanzkopfs derart beansprucht werden, dass es zu einer dynamischen Biegung in der Achsebene kommt und ein Biegemoment in den Hubzapfen eingeleitet wird. Diese Art der Biegeprüfung bzw. die daraus erhaltenen Ergebnisse werden in erster Linie für Vergleiche von Konstruktionsvarianten verwendet und sind kostengünstig.

Zur Durchführung einer Biegeprüfung ist ferner ein Kurbelwellenprüfstand bekannt, der nach dem Resonanzprinzip arbeitet und einen Hydropulszylinder aufweist, der durch Hebelarme mit den Wellenzapfen eines Kröpfungssegments verbunden ist und mit einer Zusatzmasse zur Untersuchung von Biegeschwingungen zusammenwirkt.

Weitere Kurbelwellenprüfstände sind aus der Praxis bekannt, die eine Torsionsprüfung eines Kurbelwellensegments ermöglichen. Dazu ist ein schwenkbarer Ausleger, der eine Unwucht aufweist, mit einem Wellenzapfen einer Kurbelwellenkröpfung verbunden, so dass in die Kröpfung ein Torsionsmoment einleitbar ist.

Die bekannten Prüfstände haben den Nachteil, dass die im Betrieb einer Kurbelwelle auftretenden Lastsituationen nur unvollständig nachgebildet werden können, so dass die Prüfergebnisse, die mit diesem Prüfständen erzielbar sind, nur bedingt zuverlässige Rückschlüsse auf die Betriebsfestigkeit der Kurbelwelle zulassen.

Der Erfindung liegt die Aufgabe zugrunde, eine Vorrichtung zur Prüfung der Betriebsfestigkeit einer Exzenterwelle oder eines Exzenterwellensegments zu schaffen, die einfach aufgebaut ist und die Vorraussetzung für eine verbesserte Nachbildung der im Betrieb der Exzenterwelle auftretenden Belastungen ermöglicht. Der Erfindung liegt ferner die Aufgabe zugrunde, ein Verfahren zum Prüfen der Betriebsfestigkeit einer Exzenterwelle anzugeben, das einfach durchführbar ist und eine verbesserte Nachbildung der im Betrieb der Exzenterwelle tatsächlich auftretenden Belastungen ermöglicht.

Erfindungsgemäß wird diese Aufgabe im Hinblick auf die Vorrichtung durch den Gegenstand des Anspruchs 1 und im Hinblick auf das Verfahren durch den Gegenstand des Anspruchs 9 gelöst.

Die Erfindung beruht auf dem Gedanken, eine Vorrichtung zur Prüfung der Betriebsfestigkeit einer Exzenterwelle, insbesondere einer Kurbelwelle, einer Nockenwelle und dgl., oder eines Exzenterwellensegments anzugeben, die eine Einspanneinrichtung zum drehfesten Fixieren einer Abtriebsseite der Exzenterwelle oder des Exzenterwellensegements sowie mehrere Lagerstellen zur drehbaren Lagerung der Exzenterwelle oder des Exzenterwellensegments aufweist. Die Lagerstellen sind von einander beabstandet und jeweils mit der Einspanneinrichtung fluchtend angeordnet. Die Vorrichtung weist wenigstens eine Lasteinrichtung auf, die im Prüfbetrieb zwischen zwei Lagerstellen angeordnet und angepasst ist derart, dass die Lasteinrichtung an einem Exzenterabschnitt angreift und in diesen eine Last in Form einer Tangentialkraft und/oder Radialkraft oder in Form einer tangentialen und/oder radialen Kraftkomponente einleitet.

Die Erfindung beruht ferner auf dem Gedanken, ein Verfahren zum Prüfen der Betriebsfestigkeit einer Exzenterwelle, insbesondere einer Kurbelwelle, einer Nockenwelle und dgl., oder eines Exzenterwellensegments anzugeben, bei dem eine Abtriebsseite der Exzenterwelle oder des Exzenterwellensegments drehfest fixiert und die Exzenterwelle oder das Exzenterwellensegment an mehreren Stellen drehbar und fluchtend mit der drehfesten Fixierung gelagert wird, wobei eine Last in Form einer Tangentialkraft und/oder einer Radialkraft oder in Form von tangentialen und/oder radialen Kraftkomponenten in einen Exzenterabschnitt zwischen zwei drehbar gelagerten Stellen der Exzenterwelle oder des Exzenterwellensegments eingeleitet wird.

Dies bedeutet, dass die Erfindung die Prüfung einer ruhenden bzw. stillstehenden Exzenterwelle bzw Exzenterwellensegments ermöglicht, in das zur Prüfung der Betriebsfestigkeit eine zyklische Belastung eingeleitet wird. Die Lasteinrichtung ist deshalb zur Aufbringung zyklisch sich ändernder Kräfte angepasst. Die Einspanneinrichtung fixiert drehfest die Exzenterwelle bzw das Exzenterwellensegment im Prüfbetrieb, so dass zyklische Lasten durch die Lasteinrichtung zur Prüfung der Betriebsfestigkeit, insbesondere der Dauerfestigkeit, eingeleitet werden können. Das Bauteil ist also statisch angeordnet und die Lasteinleitung erfolgt zyklisch in der Form einer Schwingbelastung.

Die Erfindung hat den Vorteil, dass im Prüfbetrieb eine möglichst realitätsnahe Belastungssituation der zu prüfenden Exzenterwelle bzw. des zu prüfenden Exzenterwellensegments simuliert werden kann, wodurch eine verbesserte Bestimmung der Betriebsfestigkeit erreicht wird. Dazu wird die Einbaulage der Exzenterwelle im Betrieb durch die erfindungsgemäß vorgesehene Einspanneinrichtung und die mit dieser fluchtend angeordneten Lagerstellen für die Exzenterwelle bzw. das Exzenterwellensegment nachgebildet. Die Lasteinleitung im Betrieb an den Exzenterabschnitten bzw. an einem Exzenterabschnitt wird durch die zwischen zwei Lagerstellen angeordnete Lasteinrichtung simuliert, die im Prüfbetrieb am Exzenterabschnitt angreift und in diesen die Last in Form einer Tangentialkraft und/oder Radialkraft oder in Form einer tangentialen und/oder radialen Kraftkomponente einleitet. Der Aufbau der erfindungsgemäßen Vorrichtung zur Prüfung der Betriebsfestigkeit ist einfach und robust und bietet die Voraussetzung dafür, dass die Betriebsfestigkeit unter Bedingungen getestet werden kann, die zu einer möglichst realitätsnahen Belastungssituation führen. Die definierte Einleitung einer zyklischen Last an einer Stelle, nämlich an den Exzenterabschnitten bzw. an einem Exzenterabschnitt ermöglicht eine sogenannte "hotspot" Prüfung der im Betrieb kritischen Stellen des Bauteils.

Dasselbe gilt für das erfindungsgemäße Verfahren zur Prüfung der Betriebsfestigkeit der Exzenterwelle bzw. des Exzenterwellensegments.

Bei einer bevorzugten Ausführungsform der Erfindung sind die wenigstens eine Lasteinrichtung einerseits und die Einspanneinrichtung und die Lagerstellen andererseits in Wellenlängsrichtung relativ zueinander beweglich derart, dass verschiedene Exzenterabschnitte durch die wenigstens eine Lasteinrichtung kraftbeaufschlagbar sind. Durch die Relativbewegung zwischen der Lasteinrichtung und der Exzenterwelle bzw. des Exzenterwellensegments im Prüfbetrieb können verschiedene Exzenterabschnitte mit der Prüfkraft beaufschlagt werden, wodurch die Vorbelastung eines Exzenterabschnittes durch den Torsionsanteil eines vorgeordneten Exzenterabschnittes berücksichtigt werden kann.

Vorzugsweise sind zwei oder mehr in Wellenlängsrichtung nachgeordnete Lasteinrichtungen vorgesehen, die in Wellenlängsrichtung beweglich und/oder einer entsprechenden Anzahl von Exzenterabschnitten stationär zugeordnet sind. Auch diese Ausführungsform hat den Vorteil, dass die Torsionsvorbelastung eines Exzenterabschnittes durch einen oder mehrere vorgeordnete andere Exzenterabschnitte simuliert werden kann. Dabei ist es möglich, dass zwei, drei oder mehr Lasteinrichtungen in Wellenlängsrichtung, also entlang der Exzenterwelle bzw. des Exzenterwellenabschnitts beweglich angeordnet sind, so dass verschiedene in Wellenlängsrichtung nach- bzw. vorgeordnete Exzenterabschnitte mit einer Prüfkraft beaufschlagt werden können. Alternativ ist es möglich, mehrere Lasteinrichtungen vorzusehen, die einer entsprechenden Anzahl von Exzenterabschnitten stationär zugeordnet sind. Es ist auch möglich, beweglich angeordnete und stationäre Lasteinrichtungen miteinander zu kombinieren derart, dass beispielsweise wenigstens eine abtriebsseitig angeordnete Lasteinrichtung stationär angeordnet und wenigstens eine in Wellenlängsrichtung nachgeordnete Lasteinrichtung beweglich angeordnet ist.

Bei einer weiteren bevorzugten Ausführungsform sind zwei oder mehr Lasteinrichtungen einem Exzenterabschnitt zugeordnet, die jeweils zur Einleitung der tangentialen und radialen Kraftkomponente geneigt angeordnet sind. Durch eine geeignete, an sich bekannte Ansteuerung der Lasteinrichtungen pro Exzenterabschnitt kann eine Veränderung des Lasteinleitungswinkels simuliert werden. Diese Ausführungsform ist auch für mehrere in Wellenlängsrichtung angeordnete Lasteinrichtungen geeignet, bei der jeweils einem Exzenterabschnitt zwei oder mehr Lasteinrichtungen zugeordnet sind. Dies hat den Vorteil, dass beispielsweise durch Zündverzögerungen auftretende Zusatzbelastungen berücksichtigt werden können.

Die Änderung des Lasteinleitungswinkels kann auch dadurch berücksichtigt werden, dass die wenigstens eine Lasteinrichtung schwenkbar angeordnet ist.

Zweckmäßigerweise umfasst die Lasteinrichtung eine servohydraulische Lasteinrichtung oder einen Resonanzkopf.

Bei einer weiteren vorteilhaften Ausführungsform ist eine Torsionseinrichtung zur Einleitung eines Torsionsmoments in die Exzenterwelle oder in das Exzenterwellensegment in Gegenüberstellung zur Einspanneinrichtung angeordnet. Durch die Torsionseinrichtung können Torsionsschwingungen berücksichtigt werden, die durch die Kopplung der Exzenterwelle mit Nebenaggregaten verursacht werden.

Vorzugsweise ist die Lasteinrichtung zur Einleitung einer variablen geregelten Prüflast angepasst.

Bei dem erfindungsgemäßen Verfahren kann vorgesehen sein, dass die Last zeitgleich oder zeitlich versetzt in verschiedene Exzenterabschnitte eingeleitet wird, wodurch die Vorbelastung eines oder mehrerer Exzenterabschnitte durch in Wellenlängsrichtung vorgeordnete Exzenterabschnitte berücksichtigt werden kann. Die Einleitung der Last unter verschiedenen Lasteinleitungswinkeln bietet die Möglichkeit, Zusatzbelastungen zu berücksichtigen, die durch Zündverzögerungen entstehen. Die Überlagerung der Last durch ein Torsionsmoment hat den Vorteil, dass bei dieser Ausführungsform Einflüsse von Nebenaggregaten bei der Prüfung der Betriebsfestigkeit berücksichtigt werden können, die mit der Exzenterwelle gekoppelt sind.

Die Erfindung wird nachfolgend mit weiteren Einzelheiten anhand von Beispielen unter Bezugnahme auf die beigefügten schematischen Zeichnungen erläutert. In diesen zeigen:
- Fig. 1: ein Diagramm der Kräfte, die im Betrieb auf den Hubzapfen einer Kurbelwelle wirken;
- Fig. 2: eine schematische Ansicht eines Ausschnitts einer Vorrichtung zur Prüfung der Betriebsfestigkeit zur Verdeutlichung der Einspannung und Lagerung der zu prüfenden Kurbelwelle;
- Fig. 3: einen Querschnitt durch eine in die Vorrichtung eingespannte Kur- belwelle zur Verdeutlichung der Wirkrichtung und des Angriffspunk- tes der Prüfkraft;
- Fig. 4: eine schematische Ansicht eines Ausschnitts einer Vorrichtung zur Prüfung der Betriebsfestigkeit zur Verdeutlichung der Einspannung und Lagerung der zu prüfenden Kurbelwelle nach einem weiteren Ausführungsbeispiel der Erfindung;
- Fig. 5a, 5b, 5c: Darstellungen der Verläufe der Momenten- und Kraftlinien bei der Kurbelwellenprüfung; und
- Fig. 6: eine Darstellung des Verlaufs der Momenten- und Kraftlinien infol- ge einer Drehmomentvorbelastung durch einen vorgelagerten Zylin- der.

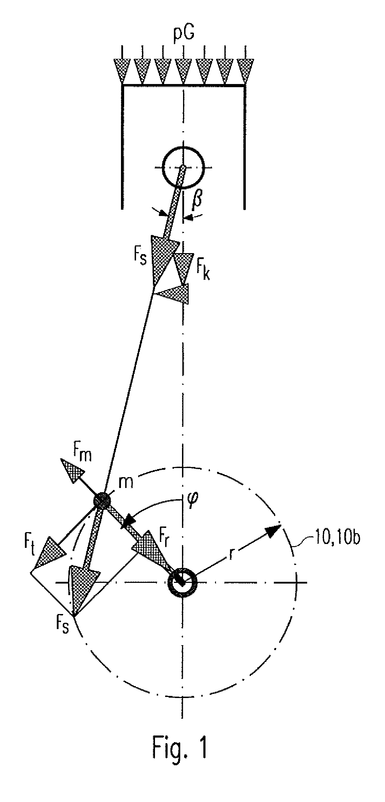

In Fig. 1 ist die Lastsituation an einem Exzenterabschnitt 10b, insbesondere an einem Hubzapfen einer Exzenterwelle 10, insbesondere einer Kurbelwelle dargestellt, bei der der Gasdruck im Zylinder vom Kolben auf das Pleuel übertragen wird. Die Pleuelstangenkraft Fₛ wird in den Hubzapfen der Kurbelwelle eingeleitet und beaufschlagt diesen mit einer tangentialen Kraftkomponente Fₜ und einer radialen Kraftkomponente Fᵣ. Außerdem wirken Massekräfte Fₘ auf den Hubzapfen.

In Abhängigkeit von der Lage der einzelnen Hubzapfen entlang der Kurbelwelle werden diese unterschiedlich beansprucht. Der auf der Abtriebsseite der Kurbelwelle angeordnete äußerste Hubzapfen, beispielsweise am vierten Zylinder, wird auf Biegung und vierfach auf Torsion beansprucht, da die Torionsvorbelastung der vorgelagerten Zylinder 1 bis 3 auf diesen Hubzapfen wirkt. Entsprechend wird der dem dritten Zylinder zugeordnete Hubzapfen auf Biegung und dreifach auf Torsion, der dem zweiten Zylinder zugeordnete Hubzapfen auf Biegung und zweifach auf Torsion und der dem ersten Zylinder zugeordnete Hubzapfen auf Biegung und einfach auf Torsion beansprucht.

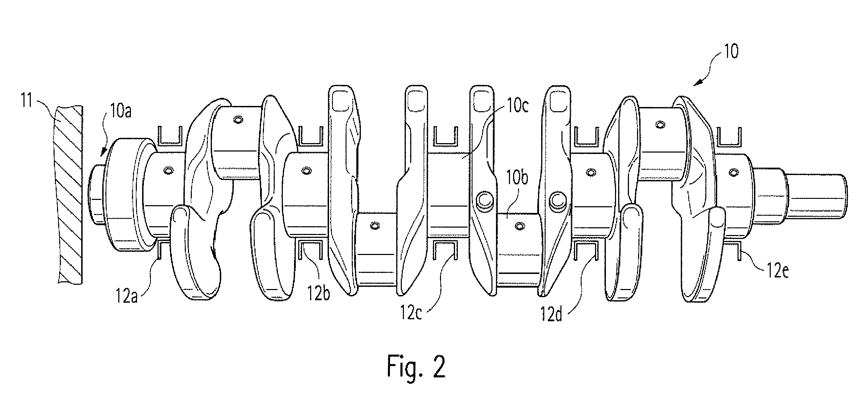

In Fig. 2 ist ein Ausführungsbeispiel für eine erfindungsgemäße Vorrichtung zur Prüfung der Betriebsfestigkeit bzw. einer Prüfvorrichtung dargestellt, die zur Prüfung von Kurbelwellen eingesetzt wird. Die Prüfvorrichtung kann auch für andere Exzenterwellen 10 verwendet werden, die mehrere Exzenterabschnitte 10b aufweisen, wie beispielsweise eine Nockenwelle und dgl.. Die Prüfvorrichtung ist angepasst und geeignet, um eine komplette Exzenterwelle 10 bzw. Kurbelwelle oder auch ein Exzenterwellensegment bzw. ein Teilsegment der Kurbelwelle zu prüfen.

Die Prüfvorrichtung gemäß Fig. 2 umfasst eine Einspanneinrichtung 11, beispielsweise Einspannbacken, die zum drehfesten Fixieren der Abtriebsseite 10a der Kurbelwelle 10 angepasst ist. Die Einspanneinrichtung 11 ist bspw. starr mit einem ortsfesten Rahmen oder Fundament derart verbunden, dass der Prüfling im Prüfbetrieb bei der Beaufschlagung der Prüflast drehfest fixiert ist. Die Prüfvorrichtung umfasst ferner mehrere Lagerstellen 12a, 12b, 12c, 12d, 12e, insbesondere mehr als 2, 3, 4 Lagerstellen, die zur drehbaren Lagerung der zu prüfenden Kurbelwelle vorgesehen sind. Die Einspanneinrichtung 11 und die Lagerstellen 12a, 12b, 12c, 12d, 12e sind jeweils fluchtend angeordnet. Die Lagerstellen 12a, 12b, 12c, 12d, 12e sind der Einspanneinrichtung 11 in Wellenlängsrichtung von der Einspanneinrichtung aus gesehen nachgeordnet. Die Abstände der einzelnen Lagerstellen 12a, 12b, 12c, 12d, 12e zueinander entsprechen den Abständen der Wellenzapfen 10c der Kurbelwelle bzw. allgemein den Abständen der Lagerzapfen der Exzenterwelle 10. Es ist möglich, dass die Abstände zwischen den einzelnen Lagerstellen 12a, 12b, 12c, 12d, 12e einstellbar sind, um die Prüfvorrichtung an unterschiedliche Kurbelwellen bzw. allgemein an unterschiedliche Prüflinge anzupassen. Dasselbe gilt für den Abstand zwischen der Einspanneinrichtung 11 und der der Einspanneinrichtung 11 unmittelbar nachgeordneten ersten Lagerstelle 12a, der so bemessen ist, dass das abtriebsseitige Wellenende der Kurbelwelle 10 drehfest fixierbar ist.

Durch die fluchtende Anordnung der Einspanneinrichtung 11 und der Lagerstellen 12a, 12b, 12c, 12d, 12e ist es auch möglich, Kurbelwellensegmente zu prüfen. In diesem Fall fixiert die Einspanneinrichtung 11 drehfest einen Wellenzapfen 10c, der abtriebsseitig freigeschnitten ist. Die in Wellenlängsrichtung nachgeordneten weiteren Wellenzapfen 10c sind, wie vorbeschrieben, durch die Lagerstellen 12a, 12b, 12c, 12d, 12e drehbar gelagert.

Die vorstehend beschriebene Anordnung der Einspanneinrichtung 11 und der Lagerstellen 12a, 12b, 12c, 12d, 12e hat ferner den Vorteil, dass mehrere Versuche an einer einzigen Kurbelwelle möglich sind, auch wenn diese im Bereich eines Hubzapfens versagt, da das restliche Teilsegment der Kurbelwelle geprüft werden kann.

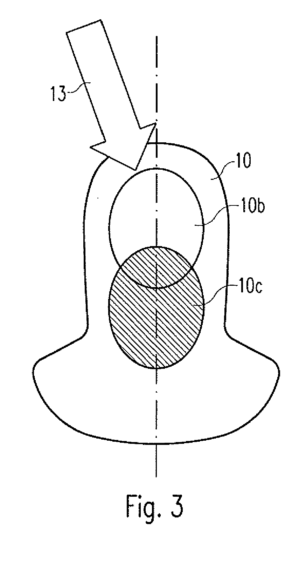

Zur Aufbringung der Prüfkraft ist wenigstens eine Lasteinrichtung 13 vorgesehen, die zumindest im Prüfbetrieb zwischen zwei Lagerstellen 12a, 12b, 12c, 12d, 12e angeordnet ist. Die Wirkrichtung und der Angriffspunkt der durch die Lasteinrichtung 13 aufbringbaren Prüfkraft ist in Fig. 3 dargestellt. Die Lasteinrichtung 13 ist angepasst derart, dass die Prüfkraft unter einem Winkel in den Hubzapfen bzw. allgemein in den Exzenterabschnitt 10b eingeleitet wird. Durch die Anstellung der Lasteinleitung wird der Pleuelwinkel abgebildet. Die Anstellung der Lasteinleitung bezieht sich auf die in Fig. 3 dargestellte vertikale Symmetrieachse der Kurbelwelle. In Fig. 3 ist ferner zu erkennen, dass die Lasteinrichtung 13 angepasst ist derart, dass die Prüfkraft außermittig am Hubzapfen angreift.

Die Einstellung des Lasteinleitungswinkels und des Angriffspunktes der Prüfkraft hängen davon ab, welche Lastsituation nachgebildet werden soll und kann vom Fachmann entsprechend vorgenommen werden.

Wie in Fig. 3 dargestellt, wird durch die geneigte Einleitung der Prüfkraft eine Last auf den Hubzapfen 10 in Form einer tangentialen und radialen Kraftkomponente aufgebracht. Es ist auch möglich, die Last in Form von zwei separaten Prüfkräften aufzubringen, die tangential und radial wirken. Die geneigte Krafteinleitung gemäß Fig. 3 ist unter dem Gesichtspunkt der einfachen Ausführung und Steuerung bevorzugt. Damit ist eine mehraxiale Prüfung möglich. Einaxiale Prüfungen sind im Prinzip nicht ausgeschlossen.

Bei der Prüfvorrichtung besteht die Möglichkeit, dass die Lasteinrichtung 13 einerseits und die Einspanneinrichtung 11 und die Lagerstellen 12a, 12b, 12c, 12d, 12e andererseits in Wellenlängsrichtung relativ zueinander beweglich sind. Die Relativbewegung kann einerseits dadurch erfolgen, dass die Einspanneinrichtung 11 und die Lagerstellen 12a, 12b, 12c, 12d, 12e ortsfest und die Lasteinrichtung 13 entlang der eingespannten Kurbelwelle verschieblich gelagert ist oder zwischen verschiedenen Lagerstellen12a, 12b, 12c, 12d, 12e anbringbar ist. Damit können verschiedene Hubzapfen mit der Prüfkraft beaufschlagt werden.

Es ist auch möglich, die Lasteinrichtung 13 ortsfest anzuordnen und die Einspanneinrichtung 11 sowie die Lagerstellen 12a, 12b, 12c, 12d, 12e verschieblich anzuordnen, so dass die eingespannte Kurbelwelle bezogen auf die Lasteinrichtung bewegt wird.

Die Prüfvorrichtung gemäß Fig. 2 kann ferner so modifiziert werden, dass zwei, drei, vier oder mehr als vier Lasteinrichtungen 13 vorgesehen sind. Es ist möglich, eine der Anzahl der Hubzapfen 10b entsprechende Anzahl von Lasteinrichtungen 13 vorzusehen.

Die Lasteinrichtungen 13 können teilweise oder insgesamt in Wellenlängsrichtung beweglich angeordnet sein, um verschiedenen Hubzapfen 10b zugeordnet zu werden. Es ist auch möglich, mehr als zwei Lasteinrichtungen 13 vorzusehen, die einer entsprechenden Anzahl von Hubzapfen 10b stationär zugeordnet sind.

Bei einer weiteren Variante ist ein Teil der Lasteinrichtungen 13 in Wellenlängsrichtung beweglich und ein anderer Teil der Lasteinrichtungen 13 stationär angeordnet.

Die vorstehend beschriebenen Varianten, bei denen verschiedene Hubzapfen 10b mit einer Prüfkraft beaufschlagt werden, bietet die Möglichkeit, die Torsionsvorbelastung eines Hubzapfens durch vorgelagerte Zylinder bei der Prüfung der Betriebsfestigkeit zu berücksichtigen.

Der Winkel, unter dem die Last eingeleitet wird (Fig. 3), kann beispielsweise dadurch variiert werden, dass zwei oder mehr Lasteinrichtungen 13 ein und demselben Exzenterabschnitt 10b bzw. Hubzapfen zugeordnet sind, wobei die Lasteinrichtungen 13 jeweils zur Einleitung der tangentialen und radialen Kraftkomponenten geneigt angeordnet sind. Beispielsweise ist es möglich, drei Lasteinrichtungen 13 auf dem Umfang des Hubzapfens 10 verteilt anzuordnen. Durch eine geeignete Ansteuerung der Lasteinrichtungen und der damit verbundenen durch die jeweilige Lasteinrichtung eingeleiteten Prüfkraft in den Hubzapfen 10b kann eine Umlaufbiegebeanspruchung entsprechend der Änderung des Lasteinleitungswinkels bzw. des Pleuelwinkels erzeugt werden. Alternativ ist es möglich, eine oder mehrere Lasteinrichtungen 13 schwenkbar anzuordnen derart, dass der Lasteinleitungswinkel veränderbar ist. Es ist auch möglich, die Lasteinrichtung 13 um den Hubzapfen 10b rotierend anzuordnen.

Durch die Änderung des Lasteinleitungswinkels können beispielsweise unterschiedlichen Belastungen, die durch eine Zündverzögerung entstehen, berücksichtigt werden.

Die im Rahmen der Erfindung offenbarten und beschriebenen Lasteinrichtungen 13 sind generell zur Aufbringung einer Prüfkraft angepasst. Dazu können an sich bekannte servohydraulische Lasteinrichtungen, bzw. Prüfzylinder oder Resonanzköpfe bzw. allgemein auf dem Resonanzprinzip basierende Lasteinrichtungen verwendet werden. Die Regelung der Prüflasteinrichtung erfolgt digital.

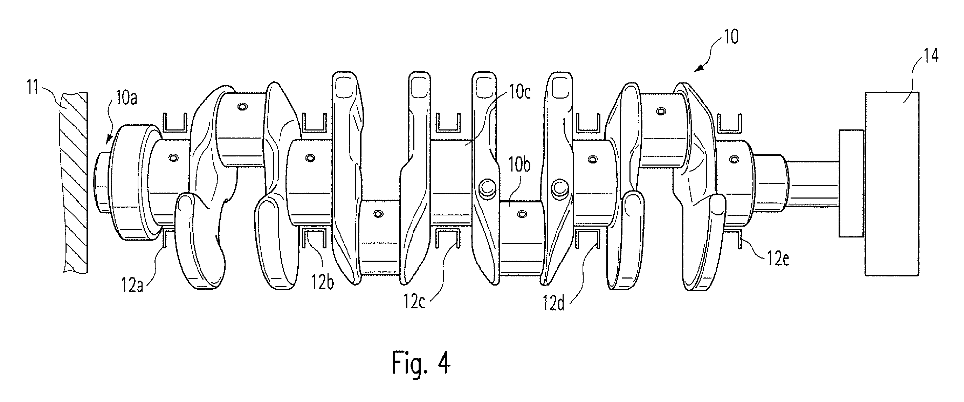

Ein weiteres Ausführungsbeispiel ist in Fig. 4 dargestellt, bei dem eine Torsionseinrichtung 14 zur Einleitung eines Torsionsmoments in die Kurbelwelle 10 vorgesehen ist. Bei dem Ausführungsbeispiel gemäß Fig. 4 ist die Torsionseinrichtung in Gegenüberstellung zur Einspanneinrichtung 11 angeordnet. Die Lagerstellen 12a, 12b, 12c, 12d, 12e sind zwischen der Einspanneinrichtung 11 und der Torsionseinrichtung 14 vorgesehen. Die Torsionseinrichtung 14 ist fluchtend mit den Lagerstellen 12a, 12b, 12c, 12d, 12e bzw. mit der Einspanneinrichtung 11 angeordnet. Diese Ausführung ist dafür geeignet, das Torsionsmoment in das der Abtriebsseite 10a gegenüber angeordnete Wellenende der Kurbelwelle 10 einzuleiten. Alternativ kann bei dieser Ausführungsform das Torsionsmoment in einen Wellenzapfen 10c eingeleitet werden. Alternativ ist es möglich, die Torsionseinrichtung 14 nicht fluchtend mit den Lagerstellen 12a, 12b, 12c, 12d, 12e anzuordnen. Diese Ausführung ist dafür geeignet, das Torsionsmoment in den Hubzapfen 10b einzuleiten.

Die Torsionseinrichtung 14, beispielsweise ein Drehzylinder ermöglicht die Aufbringung von Torsionsschwingungen, die im Betrieb von Nebenaggregaten erzeugt werden, die mit der Kurbelwelle verbunden sind. Derartige Nebenaggregate können beispielsweise eine Wasserpumpe oder die Nockenwelle sein.

Die vorstehend beschriebene Prüfvorrichtung würde wohl ohne eingespannten Prüfling als auch mit eingespanntem Prüfling offenbart und beansprucht. Im Zusammenhang mit der Prüfvorrichtung ohne Prüfling wird anhand des Prüflings die Anordnung bzw. Lage und Funktionsweise der Komponenten der Prüfvorrichtung erläutert.

Die Funktionsweise der Prüfvorrichtung wird nachfolgend beschrieben:
Zum Prüfen der Biegefestigkeit einer Exzenterwelle 10, insbesondere einer Kurbelwelle, wird diese in der Prüfvorrichtung eingespannt derart, dass die Abtriebsseite 10a der Kurbelwelle oder eines Teilsegments der Kurbelwelle drehfest fixiert wird. Dabei kann entweder das abtriebsseitige Wellenende der Kurbelwelle oder ein Wellenzapfen 10c der Kurbelwelle fixiert werden. Die Kurbelwelle wird an mehreren Stellen drehbar gelagert, insbesondere an den Hauptlager- bzw. Wellenzapfen 10c der Kurbelwelle. Die drehbare Lagerung der Kurbelwelle erfolgt fluchtend mit der drehfesten Fixierung der Abtriebsseite 10a. Zwischen zwei drehbar gelagerten Stellen der Kurbelwelle bzw. des Teilsegments der Kurbelwelle wird eine Last, insbesondere eine Prüfkraft in Form einer Tangentialkraft und einer Radialkraft oder in Form von tangentialen und radialen Kraftkomponenten in den zwischen den beiden drehbar gelagerten Stellen befindlichen Hubzapfen eingeleitet. Die Art und Weise der Krafteinleitung ist im Zusammenhang mit der Prüfvorrichtung detailliert beschrieben.

Die Prüfkraft bzw. die Last kann zeitgleich oder zeitlich versetzt in verschiedene Hubzapfen 10b eingeleitet werden, um so eine Torsionsvorbelastung eines Exzenterabschnittes durch vorgelagerte Exzenterabschnitte zu erreichen. Die Last kann unter verschiedenen Lasteinleitungswinkeln eingeleitet werden, um so Zündversetzungen zu berücksichtigen. Torsionsschwingungen durch Nebenaggregate, die mit der Kurbelwelle gekoppelt sind, können durch die Überlagerung der Prüfkraft mit einem Torsionsmoment berücksichtigt werden.

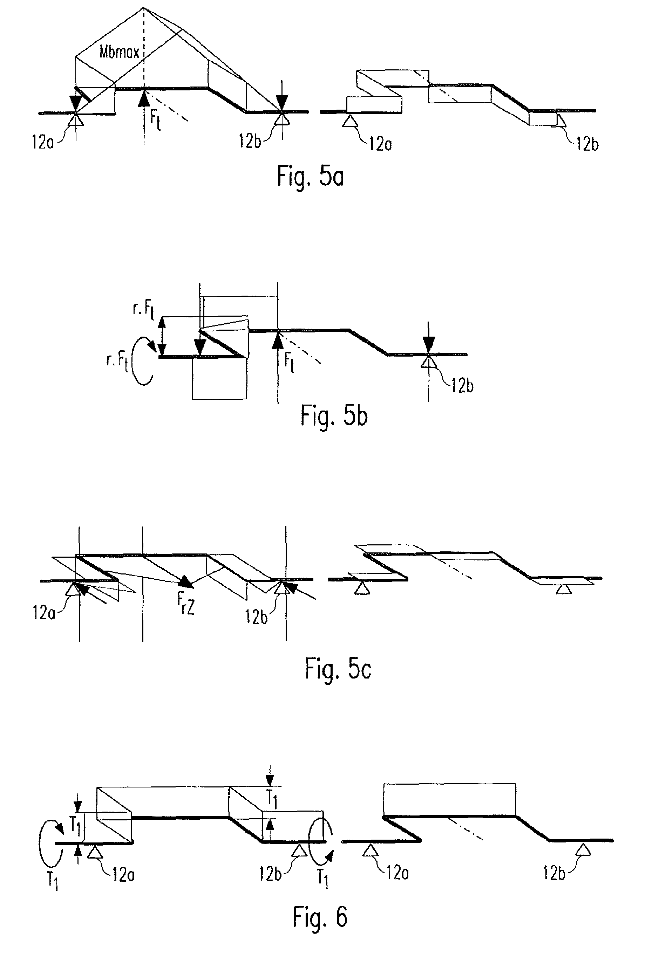

In den Figuren 5a, 5b, 5c sind die Momenten- und Kraftlinien im Bereich einer Kröpfung einer Kurbelwelle dargestellt, die bei der Kurbelwellenprüfung mit einer Prüfvorrichtung gemäß Fig. 2 bzw. bei der Durchführung des vorstehend beschriebenen Prüfverfahrens auftreten. In der linken Darstellung in Fig. 5a ist der Momenten- und Kraftverlauf zwischen den beiden Lagerstellen 12a, 12b gezeigt, der aufgrund der Tangentialkraft Fₜ bzw. der tangentialen Kraftkomponente auftritt und den Biegeanteil der Belastung ausmacht. In den beiden Wellenzapfen steigt die Biegebeanspruchung zur Kurbelwange hin an. In der Kurbelwange tritt eine konstante Torsionsbeanspruchung auf. Im Hubzapfen steigt die Biegebeanspruchung zur Einleitungsstelle der Tangentialkraft Fₜ an, wo das maximale Biegemoment anliegt. Wie in der rechten Darstellung in Fig. 5a gezeigt, ist die Schubbeanspruchung entlang der Kröpfung konstant.

In Fig. 5b ist der Verlauf der Momenten- und Kraftlinien infolge eines eigenen Torsionsanteils resultierend aus der Tangentialkraft Fₜ dargestellt. Im Wellenzapfen wirkt eine konstante Torsionsbelastung. Die in der Kurbelwange auftretende Biegebeanspruchung fällt zum Hubzapfen hin linear ab. Im Hubzapfen wirkt eine konstante Schubbeanspruchung.

In Fig. 5c ist der Verlauf der Momenten- und Kraftlinien aufgrund der auf den Hubzapfen wirkenden Radialkraft F_{rZ} dargestellt. Die aufgebrachte Radialprüfkraft bzw. radiale Prüfkraftkomponente entspricht der im Betrieb auftretenden Differenz zwischen der Radialkraft und der entgegenwirkenden Massekraft. Wie der linken Darstellung in Fig. 5c zu entnehmen, steigt die Biegebeanspruchung in den beiden Wellenzapfen linear zur Kurbelwange hin an. In der Kurbelwange ist die Biegebeanspruchung konstant und steigt im Hubzapfen zum Angriffspunkt der Prüfkraft hin an, wo das maximale Biegemoment anliegt. Zusätzlich werden die beiden Kurbelwangen auf Druck beansprucht. Der rechten

Darstellung in Fig. 5c ist zu entnehmen, dass an den beiden Wellenzapfen sowie am Hubzapfen eine konstante Schubkraft anliegt.

Bei der Ausführungsform der Erfindung, die eine Beaufschlagung verschiedener Hubzapfen mit einer Prüfkraft ermöglicht, kann die Vorbelastung eines Hubzapfens durch den Torsionsanteil eines vorgelagerten Zylinders berücksichtigt werden, wie in Fig. 6 dargestellt. In der linken Darstellung gemäß Fig. 6 ist gezeigt, dass infolge der Vorbelastung durch den Torsionsanteil eines vorgelagerten Zylinders eine konstante Torsionsbeanspruchung in den beiden Wellenzapfen der Kröpfung auftritt. Die beiden Kurbelwangen werden auf Biegung beansprucht. Im Hubzapfen tritt eine konstante Schubbeanspruchung auf. Wie in der linken Darstellung gemäß Fig. 6 gezeigt, kommt es bei der Sekundärbeanspruchung im Hubzapfen zu einer konstanten Torsionsbeanspruchung.

### Bezugszeichenliste

- 10: Exzenterwelle
- 10a: Abtriebsseite
- 10b: Exzenterabschnitt
- 10c: Wellenzapfen
- 11: Einspanneinrichtung
- 12a, 12b, 12c, 12d, 12e: Lagerstellen
- 13: Lasteinrichtung
- 14: Torsionseinrichtung

## Patentansprüche

1. Vorrichtung zur Prüfung der Betriebsfestigkeit einer Exzenterwelle (10), insbesondere einer Kurbelwelle, einer Nockenwelle und dgl., oder eines Exzenterwellensegments mit einer Einspanneinrichtung (11) zum drehfesten Fixieren einer Abtriebsseite (10a) der Exzenterwelle (10) oder des Exzenterwellensegments, mehreren Lagerstellen (12a, 12b, 12c, 12d, 12e) zur drehbaren Lagerung der Exzenterwelle (10) oder des Exzenterwellensegments, die voneinander beabstandet und jeweils mit der Einspanneinrichtung (11) fluchtend angeordnet sind, und wenigstens einer Lasteinrichtung (13), die im Prüfbetrieb zwischen zwei Lagerstellen (12a, 12b, 12c, 12d, 12e) angeordnet und angepasst ist derart, dass die Lasteinrichtung (13) an einem Exzenterabschnitt (10b) angreift und in diesen eine Last in Form einer Tangentialkraft und/oder Radialkraft oder in Form einer tangentialen und/oder radialen Kraftkomponente einleitet.

2. Vorrichtung nach Anspruch 1,
**dadurch gekennzeichnet, dass**
die wenigstens eine Lasteinrichtung (13) einerseits und die Einspanneinrichtung (11) und die Lagerstellen (12a, 12b, 12c, 12d, 12e) andererseits in Wellenlängsrichtung relativ zueinander beweglich sind derart, dass verschiedene Exzenterabschnitte (10b) durch die wenigstens eine Lasteinrichtung (10) kraftbeaufschlagbar sind.

3. Vorrichtung nach Anspruch 1 oder 2,
**dadurch gekennzeichnet, dass**
zwei oder mehr in Wellenlängsrichtung nachgeordnete Lasteinrichtungen (13) vorgesehen sind, die in Wellenlängsrichtung beweglich und/oder einer entsprechenden Anzahl von Exzenterabschnitten (10b) stationär zugeordnet sind.

4. Vorrichtung nach einem der Ansprüche 1 bis 3,
**dadurch gekennzeichnet, dass**
zwei oder mehr Lasteinrichtungen (13) einem Exzenterabschnitt (10b) zugeordnet sind, die jeweils zur Einleitung der tangentialen und radialen Kraftkomponente geneigt angeordnet sind.

5. Vorrichtung nach wenigstens einem der Ansprüche 1 bis 4,
**dadurch gekennzeichnet, dass**
die wenigstens eine Lasteinrichtung (13) schwenkbar ist derart, dass ein Lasteinleitungswinkel veränderbar ist.

6. Vorrichtung nach wenigstens einem der Ansprüche 1 bis 5,
**dadurch gekennzeichnet, dass**
die Lasteinrichtung (13) eine servohydraulische Lasteinrichtung oder einen Resonanzkopf umfasst.

7. Vorrichtung nach wenigstens einem der Ansprüche 1 bis 6,
**dadurch gekennzeichnet, dass**
eine Torsionseinrichtung (14) zur Einleitung eines Torsionsmoments in die Exzenterwelle (10) oder in das Exzenterwellensegment und die Einspanneinrichtung (11) in Gegenüberstellung angeordnet ist.

8. Vorrichtung nach wenigstens einem der Ansprüche 1 bis 7,
**dadurch gekennzeichnet, dass**
die Lasteinrichtung (13) zur Einleitung einer variablen geregelten Prüflast angepasst ist.

9. Verfahren zum Prüfen der Betriebsfestigkeit einer Exzenterwelle (10), insbesondere einer Kurbelwelle, einer Nockenwelle und dgl., oder eines Exzenterwellensegments, bei dem eine Abtriebsseite der Exzenterwelle (10) oder des Exzenterwellensegments drehfest fixiert und die Exzenterwelle (10) oder das Exzenterwellensegment an mehreren Stellen drehbar und fluchtend mit der drehfesten Fixierung gelagert wird, wobei eine Last in Form einer Tangentialkraft und/oder einer Radialkraft oder in Form von tangentialen und/oder radialen Kraftkomponenten in einen Exzenterabschnitt (10b) zwischen zwei drehbar gelagerten Stellen der Exzenterwelle (10) oder des Exzenterwellensegments eingeleitet wird.

10. Verfahren nach Anspruch 9,
**dadurch gekennzeichnet, dass**
die Last zeitgleich oder zeitlich versetzt in verschiedene Exzenterabschnitte (10b) eingeleitet wird.

11. Verfahren nach Anspruch 9 oder 10,
**dadurch gekennzeichnet, dass**
die Last unter verschiednen Lasteinleitungswinkeln eingeleitet wird.

12. Verfahren nach wenigstens einem der Ansprüche 9 bis 11,
**dadurch gekennzeichnet, dass**
ein Torsionsmoment der Last überlagert wird.
